# EUROPEAN PATENT SPECIFICATION

(11) **EP 4 067 045 B1**
(45) Date of publication and mention of the grant of the patent: **02.12.2026**
(21) Application number: 22158200.0
(22) Date of filing: 23.02.2022
(51) Int. Cl.: B29C 45/78

(54) **INJECTION MOLDING MACHINE HAVING A CONTROL DEVICE FOR THE INJECTION MOLDING MACHINE, AND CONTROL METHOD**
SPRITZGIESSMASCHINE MIT EINER STEUERVORRICHTUNG FÜR DIE SPRITZGIESSMASCHINE UND STEUERUNGSVERFAHREN
MACHINE DE MOULAGE PAR INJECTION COMPRENANT UN DISPOSITIF DE COMMANDE POUR LA MACHINE DE MOULAGE PAR INJECTION, ET PROCÉDÉ DE COMMANDE

(30) Priority: 31.03.2021 JP 2021062315
(43) Date of publication of application: 05.10.2022
(73) Proprietor: SUMITOMO HEAVY INDUSTRIES, LTD., Tokyo 141-6025 (JP)
(72) Inventor: KAWAGUCHI, Tatsuya, Chiba, 263-0001 (JP)
(74) Representative: Louis Pöhlau Lohrentz

(56) References cited:
- EP-A1- 3 100 840
- EP-A1- 3 389 980
- EP-B1- 3 389 980
- WO-A1-2009/075269
- JP-A- 2018 165 033
- JP-B2- 3 794 610
- JP-B2- 5 306 772
- US-A1- 2004 166 188
- US-A1- 2009 208 600

## Description

### BACKGROUND OF THE INVENTION

### Field of the Invention

The present invention relates to an injection molding machine, a control device for an injection molding machine, and a control method.

### Description of Related Art

An injection molding machine includes a plasticizing cylinder to which a molding material (for example, a resin pellet) is supplied, and used for melting the molding material. The injection molding machine manufactures a molding product by causing the plasticizing cylinder to melt the molding material and filling a cavity space inside a mold unit with the melted molding material.

During molding, the molding material is melted when a total calorific value generated by heat from the plasticizing cylinder and shearing heat generated by rotation of a screw exceeds a prescribed threshold. That is, even when the molding is interrupted or stopped, when the calorific value applied to the molding material exceeds the prescribed threshold, there is a possibility that the molding material may melt near a root of the cylinder. European Patent Publication No. EP 3100840 A1 discloses an injection molding machine in which a molten state of a molding material can be ascertained. Japanese Unexamined Patent Publication No. JP 2018-165033 A discloses an injection molding machine and an evaluation system for determining a molten state of a resin of the injection molding machine. Japanese Patent No. JP 3794610 B2 discloses a temperature control method for a heating cylinder provided in an injection molding machine.

### SUMMARY OF THE INVENTION

According to a technique disclosed in Japanese Unexamined Patent Publication No. 2004-195879, an example is disclosed in which a set value during heating varies depending on whether or not a screw exists at or near an advance limit in view of restarting a molding operation when molding is completed. That is, the technique disclosed in Japanese Unexamined Patent Publication No. 2004-195879 is a technique relating to operation restarting, and is not a technique relating to a case where the molding is interrupted or stopped.

In this way, in a case where the molding is interrupted or stopped, when the calorific value applied to a molding material exceeds a prescribed threshold, and the molding material melts near a root of a plasticizing cylinder, there is a possibility that the molding material may not be transported. Therefore, for example, the related art adopts a technique for lowering a temperature of the plasticizing cylinder to a predetermined temperature or discharging all of the molding material inside the plasticizing cylinder when the molding is interrupted or stopped.

However, even when the temperature of the plasticizing cylinder is lowered to the predetermined temperature, there is a possibility that the molding material inside the plasticizing cylinder may melt before the temperature is lowered to the predetermined temperature. In addition, when all of the molding material inside the plasticizing cylinder is discharged, there is a disadvantage in that a large amount of the molding material is wasted.

One aspect of the present invention is to provide a technique for suppressing a loss of a molding material and shortening a time required until molding starts by moving the molding material in response to the calorific value applied to the molding material.

According to an aspect of the present invention, there is provided an injection molding machine including a control device that controls an injection unit which fills a mold unit with a molding material plasticized inside a cylinder. The control device includes an acquisition unit that acquires a temperature of a portion of the cylinder, which transports the molding material to a nozzle side of the cylinder, after molding with the molding material from the cylinder by the injection unit is stopped, the cylinder being divided into a plurality of zones in an axial direction of the cylinder, and the portion being any one of two zones closest among the plurality of zones to a feed port, and a movement control unit that controls movement of the molding material such that a predetermined amount of the molding material existing in the portion moves to the nozzle side after the molding is stopped, when the acquired temperature satisfies a predetermined condition.

According to an aspect of the present invention, a molding material is moved in response to the calorific value applied to the molding material. In this manner, suppressing a loss of the molding material and shortening a time required until molding starts are realized.

### BRIEF DESCRIPTION OF THE DRAWINGS

FIG. 1 is a view illustrating a state when mold opening is completed in an injection molding machine according to an embodiment.
FIG. 2 is a view illustrating a state when mold clamping is performed in the injection molding machine according to the embodiment.
FIG. 3 is a view illustrating a main portion of an injection unit according to a first embodiment.
FIG. 4 is a functional block diagram illustrating components of a control device according to the first embodiment.
FIG. 5 is a view illustrating a position of a screw surface from which a temperature T1 is to be measured and a position of a cylinder inner wall from which a temperature T2 is to be measured.
FIG. 6 is a flowchart illustrating a control performed after molding in the injection molding machine to the first embodiment is stopped.

### DETAILED DESCRIPTION OF THE INVENTION

Hereinafter, embodiments of the present invention will be described with reference to the drawings. In each drawing, the same or corresponding reference numerals will be assigned to the same or corresponding configurations, and description thereof will be omitted.

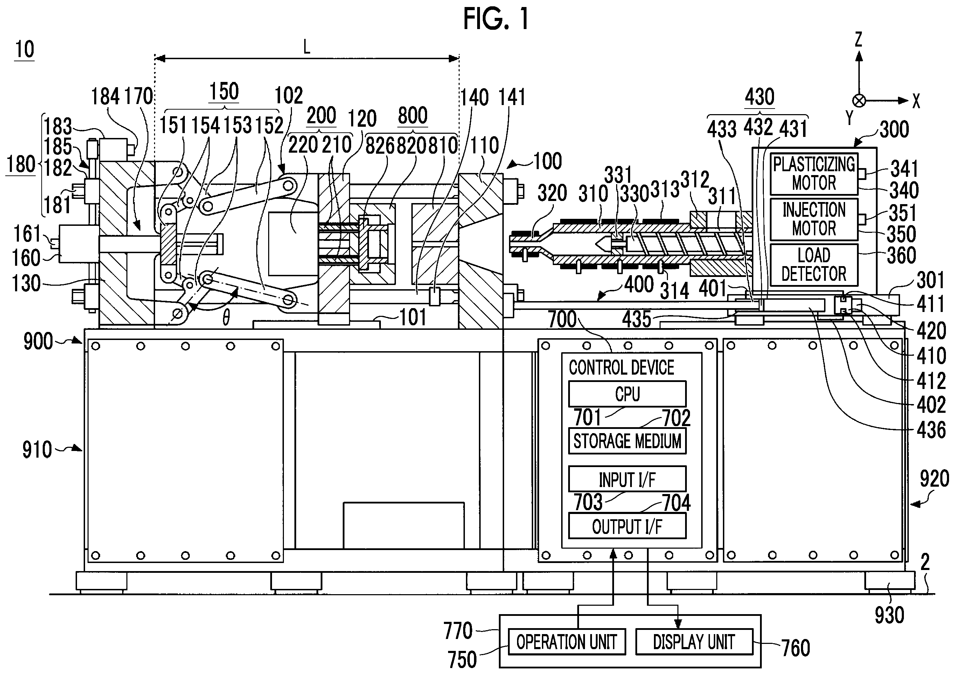

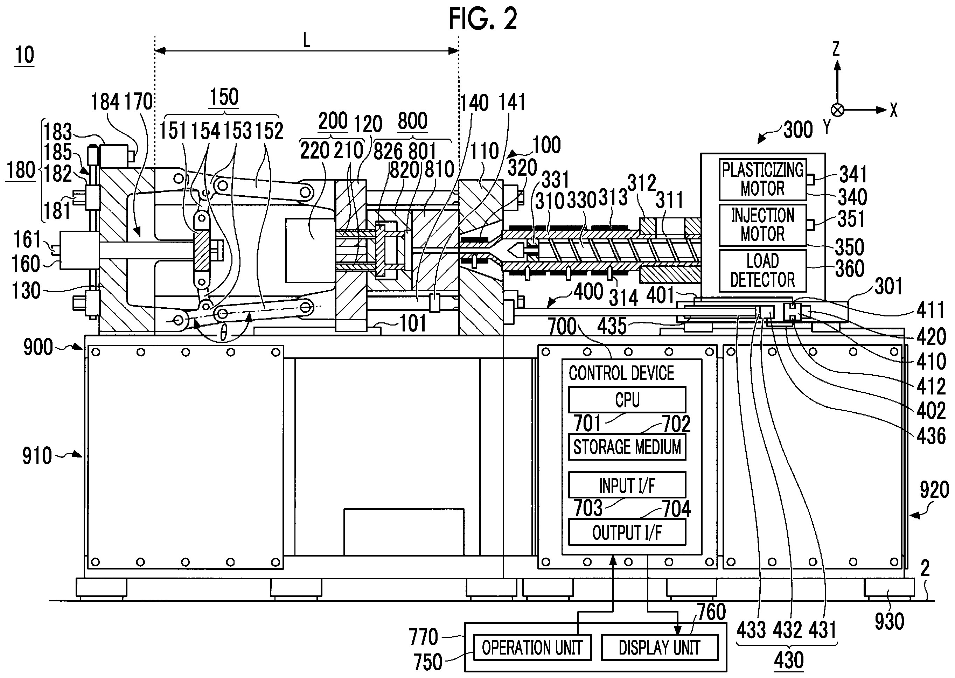

FIG. 1 is a view illustrating a state when mold opening is completed in an injection molding machine according to a first embodiment. FIG. 2 is a view illustrating a state when mold clamping is performed in the injection molding machine according to the first embodiment. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of an injection molding machine 10. A negative side in the Y-axial direction will be referred to as an operation side, and a positive side in the Y-axial direction will be referred to as a counter operation side.

As illustrated in FIGS. 1 and 2, the injection molding machine 10 includes a mold clamping unit 100 that opens and closes a mold unit 800, an ejector unit 200 that ejects a molding product molded by the mold unit 800, an injection unit 300 that injects a molding material into the mold unit 800, a moving unit 400 that advances and retreats the injection unit 300 with respect to the mold unit 800, a control device 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the injection unit 300. The mold clamping unit frame 910 and the injection unit frame 920 are respectively installed on a floor 2 via a leveling adjuster 930. The control device 700 is disposed in an internal space of the injection unit frame 920. Hereinafter, each component of the injection molding machine 10 will be described.

### (Mold Clamping Unit)

In describing the mold clamping unit 100, a moving direction of a movable platen 120 during mold closing (for example, a positive direction of an X-axis) will be defined as forward, and a moving direction of the movable platen 120 during mold opening (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary mold 810 and a movable mold 820.

For example, the mold clamping unit 100 is a horizontal type, and the mold opening and closing direction is a horizontal direction. The mold clamping unit 100 includes a stationary platen 110 to which the stationary mold 810 is attached, the movable platen 120 to which the movable mold 820 is attached, and a moving mechanism 102 that moves the movable platen 120 in the mold opening and closing direction with respect to the stationary platen 110.

The stationary platen 110 is fixed to the mold clamping unit frame 910. The stationary mold 810 is attached to a facing surface of the stationary platen 110 which faces the movable platen 120.

The movable platen 120 is disposed to be movable in the mold opening and closing direction with respect to the mold clamping unit frame 910. A guide 101 that guides the movable platen 120 is laid on the mold clamping unit frame 910. The movable mold 820 is attached to a facing surface of the movable platen 120 which faces the stationary platen 110.

The movable platen 120 is advanced and retreated with respect to the stationary platen 110. In this manner, the moving mechanism 102 performs mold closing, pressurizing, mold clamping, depressurizing, and mold opening of the mold unit 800. The moving mechanism 102 includes a toggle support 130 disposed at an interval from the stationary platen 110, a tie bar 140 that connects the stationary platen 110 and the toggle support 130 to each other, a toggle mechanism 150 that moves the movable platen 120 in the mold opening and closing direction with respect to the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval between the stationary platen 110 and the toggle support 130.

The toggle support 130 is disposed at an interval from the stationary platen 110, and is mounted on the mold clamping unit frame 910 to be movable in the mold opening and closing direction. The toggle support 130 may be disposed to be movable along a guide laid on the mold clamping unit frame 910. The guide of the toggle support 130 may be common to the guide 101 of the movable platen 120.

In the present embodiment, the stationary platen 110 is fixed to the mold clamping unit frame 910, and the toggle support 130 is disposed to be movable in the mold opening and closing direction with respect to the mold clamping unit frame 910. However, the toggle support 130 may be fixed to the mold clamping unit frame 910, and the stationary platen 110 may be disposed to be movable in the mold opening and closing direction with respect to the mold clamping unit frame 910.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control device 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 in the mold opening and closing direction with respect to the toggle support 130. The toggle mechanism 150 has a crosshead 151 that moves in the mold opening and closing direction, and a pair of link groups bent and stretched by a movement of the crosshead 151. Each of the pair of link groups has a first link 152 and a second link 153 which are connected to be freely bent and stretched by a pin. The first link 152 is oscillatingly attached to the movable platen 120 by a pin. The second link 153 is oscillatingly attached to the toggle support 130 by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to configurations illustrated in FIGS. 1 and 2. For example, in FIGS. 1 and 2, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut.

The mold clamping unit 100 performs a mold closing process, a pressurizing process, a mold clamping process, a depressurizing process, and a mold opening process under the control of the control device 700.

In the mold closing process, the mold clamping motor 160 is driven to advance the movable platen 120 by advancing the crosshead 151 to a mold closing completion position at a set movement speed. In this manner, the movable mold 820 is caused to touch the stationary mold 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control device 700.

A crosshead position detector for detecting a position of the crosshead 151 and a crosshead movement speed detector for measuring a movement speed of the crosshead 151 are not limited to the mold clamping motor encoder 161, and a general detector can be used. In addition, a movable platen position detector for detecting a position of the movable platen 120 and a movable platen movement speed detector for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at the mold clamping position. In the mold clamping process, the mold clamping force generated in the pressurizing process is maintained. In the mold clamping process, a cavity space 801 (refer to FIG. 2) is formed between the movable mold 820 and the stationary mold 810, and the injection unit 300 fills the cavity space 801 with a liquid molding material. A molding product is obtained by solidifying the molding material filled therein.

The number of the cavity spaces 801 may be one or more. In the latter case, a plurality of the molding products can be obtained at the same time. An insert material may be disposed in a portion of the cavity space 801, and the other portion of the cavity space 801 may be filled with the molding material. A molding product in which the insert material and the molding material are integrated with each other can be obtained.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position at a set movement speed. In this manner, the movable platen 120 is retreated so that the movable mold 820 is separated from the stationary mold 810. Thereafter, the ejector unit 200 ejects the molding product from the movable mold 820.

Setting conditions in the mold closing process, the pressurizing process, and the mold clamping process are collectively set as a series of setting conditions. For example, the movement speed or positions of the crosshead 151 (including the mold closing start position, the movement speed switching position, the mold closing completion position, and the mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner. For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the positions of the movable platen 120 may be set. In addition, instead of the position (for example, the mold clamping position) of the crosshead or the position of the movable platen, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold unit 800 is changed due to replacement of the mold unit 800 or a temperature change in the mold unit 800, mold space adjustment is performed so that a predetermined mold clamping force is obtained during the mold clamping. For example, in the mold space adjustment, the interval L between the stationary platen 110 and the toggle support 130 is adjusted so that the link angle θ of the toggle mechanism 150 becomes a predetermined angle when the movable mold 820 touches the stationary mold 810.

The mold clamping unit 100 has the mold space adjustment mechanism 180. The mold space adjustment mechanism 180 performs the mold space adjustment by adjusting the interval L between the stationary platen 110 and the toggle support 130. For example, a timing for the mold space adjustment is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control device 700. The control device 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control device 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 may include a mold temperature controller that adjusts the temperature of the mold unit 800. The mold unit 800 internally has a flow path of a temperature control medium. The mold temperature controller adjusts the temperature of the mold unit 800 by adjusting the temperature of the temperature control medium supplied to the flow path of the mold unit 800.

The mold clamping unit 100 of the present embodiment is the horizontal type in which the mold opening and closing direction is the horizontal direction, but may be a vertical type in which the mold opening and closing direction is an upward-downward direction.

The mold clamping unit 100 of the present embodiment includes the mold clamping motor 160 as a drive source. However, a hydraulic cylinder may be provided instead of the mold clamping motor 160. In addition, the mold clamping unit 100 may have a linear motor for mold opening and closing, and may have an electromagnet for mold clamping.

### (Ejector Unit)

In describing the ejector unit 200, similarly to the description of the mold clamping unit 100, a moving direction of the movable platen 120 during the mold closing (for example, the positive direction of the X-axis) will be defined as forward, and a moving direction of the movable platen 120 during the mold opening (for example, the negative direction of the X-axis) will be defined as rearward.

The ejector unit 200 is attached to the movable platen 120, and is advanced and retreated together with the movable platen 120. The ejector unit 200 has an ejector rod 210 that ejects a molding product from the mold unit 800, and a drive mechanism 220 that moves the ejector rod 210 in the moving direction (X-axial direction) of the movable platen 120.

The ejector rod 210 is disposed to be freely advanced and retreated in a through-hole of the movable platen 120. A front end portion of the ejector rod 210 comes into contact with an ejector plate 826 of the movable mold 820. The front end portion of the ejector rod 210 may be connected to or may not be connected to the ejector plate 826.

For example, the drive mechanism 220 has an ejector motor and a motion conversion mechanism that converts a rotary motion of the ejector motor into a linear motion of the ejector rod 210. The motion conversion mechanism includes a screw shaft and a screw nut screwed to the screw shaft. A ball or a roller may be interposed between the screw shaft and the screw nut.

The ejector unit 200 performs an ejection process under the control of the control device 700. In the ejection process, the ejector rod 210 is advanced from a standby position to an ejection position at a set movement speed. In this manner, the ejector plate 826 is advanced to eject the molding product. Thereafter, the ejector motor is driven to retreat the ejector rod 210 at a set movement speed, and the ejector plate 826 is retreated to an original standby position.

For example, a position or a movement speed of the ejector rod 210 is detected by using an ejector motor encoder. The ejector motor encoder detects the rotation of the ejector motor, and transmits a signal indicating a detection result thereof to the control device 700. An ejector rod position detector for detecting the position of the ejector rod 210, and an ejector rod movement speed detector for measuring the movement speed of the ejector rod 210 are not limited to the ejector motor encoder, and a general detector can be used.

### (Injection Unit)

In describing the injection unit 300, unlike the description of the mold clamping unit 100 or the description of the ejector unit 200, a moving direction of the screw 330 during filling (for example, the negative direction of the X-axis) will be defined as forward, and a moving direction of the screw 330 during plasticizing (for example, the positive direction of the X-axis) will be defined as rearward.

The injection unit 300 is installed in a slide base 301, and the slide base 301 is disposed to be freely advanced and retreated with respect to the injection unit frame 920. The injection unit 300 is disposed as to be freely advanced and retreated with respect to the mold unit 800. The injection unit 300 touches the mold unit 800, and fills the cavity space 801 inside the mold unit 800 with the molding material plasticized inside a cylinder 310. For example, the injection unit 300 includes the cylinder 310 that heats the molding material, a nozzle 320 provided in a front end portion of the cylinder 310, a screw 330 disposed to be freely advanced and retreated and rotatable inside the cylinder 310, a plasticizing motor 340 that rotates the screw 330, an injection motor 350 that advances and retreats the screw 330, and a load detector 360 that measures a load transmitted between the injection motor 350 and the screw 330.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The cylinder 310 is divided into a plurality of zones in the axial direction (for example, the X-axial direction) of the cylinder 310. The heating unit 313 and the temperature measurer 314 are provided in each of the plurality of zones. The control device 700 controls the heating unit 313 so that a set temperature is set in each of the plurality of zones and a measurement temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control device 700 controls the heating unit 313 so that a measurement temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is injected from the nozzle 320, and fills the inside of the mold unit 800.

As a backflow prevention valve for preventing a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the molding material accumulated in front of the screw 330 is prevented from flowing rearward.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The injection unit 300 may include a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The load detector 360 measures a load transmitted between the injection motor 350 and the screw 330. The measured load is converted into the pressure by the control device 700. The load detector 360 is provided in a load transmission channel between the injection motor 350 and the screw 330, and measures the load acting on the load detector 360.

The load detector 360 transmits a signal of the measured load to the control device 700. The load detected by the load detector 360 is converted into the pressure acting between the screw 330 and the molding material, and is used in controlling or monitoring the pressure received from the molding material by the screw 330, a back pressure against the screw 330, or the pressure acting on the molding material from the screw 330.

A pressure detector for measuring a pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold unit 800.

The injection unit 300 performs a plasticizing process, a filling process, and a holding pressure process under the control of the control device 700. The filling process and the holding pressure process may be collectively referred to as an injection process.

In the plasticizing process, the plasticizing motor 340 is driven to rotate the screw 330 at a set rotational speed, and the molding material is fed forward along the helical groove of the screw 330. As a result, the molding material is gradually melted. As the liquid molding material is fed forward of the screw 330 and is accumulated in a front portion of the cylinder 310, the screw 330 is retreated. For example, a rotational speed of the screw 330 is measured by using a plasticizing motor encoder 341. The plasticizing motor encoder 341 detects the rotation of the plasticizing motor 340, and transmits a signal indicating a detection result thereof to the control device 700. A screw rotational speed detector for measuring the rotational speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the load detector 360, for example. When the screw 330 is retreated to a plasticizing completion position and a predetermined amount of the molding material is accumulated in front of the screw 330, the plasticizing process is completed.

The position and the rotational speed of the screw 330 in the plasticizing process are collectively set as a series of setting conditions. For example, a plasticizing start position, a rotating speed switching position, and a plasticizing completion position are set. The positions are aligned in this order from the front side toward the rear side, and represent the start point and the end point of the section in which the rotational speed is set. The rotational speed is set for each section. The number of the rotating speed switching positions may be one or more. The rotating speed switching position may not be set. In addition, the back pressure is set for each section.

In the filling process, the injection motor 350 is driven to advance the screw 330 at a set movement speed, and the cavity space 801 inside the mold unit 800 is filled with the liquid molding material accumulated in front of the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When the pressure of the screw 330 is equal to or lower than a setting pressure, the screw 330 is advanced at a set movement speed. On the other hand, when the pressure of the screw 330 exceeds the setting pressure, in order to protect the mold, the screw 330 is advanced at the movement speed lower than the set movement speed so that the pressure of the screw 330 is equal to or lower than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is held at a setting pressure, and the molding material remaining inside the cylinder 310 is pressed toward the mold unit 800. The molding material which is insufficient due to cooling shrinkage inside the mold unit 800 can be replenished. The holding pressure is measured by using the load detector 360, for example. A set value of the holding pressure may be changed depending on an elapsed time from the start of the holding pressure process. The holding pressure and a holding time for holding the holding pressure in the holding pressure process may be respectively set, or may be collectively set as a series of setting conditions.

In the holding pressure process, the molding material in the cavity space 801 inside the mold unit 800 is gradually cooled, and when the holding pressure process is completed, an inlet of the cavity space 801 is closed by the solidified molding material. This state is referred to as gate seal, and prevents the backflow of the molding material from the cavity space 801. After the holding pressure process, a cooling process starts. In the cooling process, the molding material inside the cavity space 801 is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the injection unit 300 of the present embodiment is a horizontal type in which the axial direction of the cylinder 310 is a horizontal direction, but may be a vertical type in which the axial direction of the cylinder 310 is an upward-downward direction. The mold clamping unit combined with the injection unit 300 of the vertical type may be the vertical type or the horizontal type. Similarly, the mold clamping unit combined with the injection unit 300 of the horizontal type may be the horizontal type or the vertical type.

### (Moving Unit)

In describing the moving unit 400, similarly to the description of the injection unit 300, a moving direction of the screw 330 during the filling (for example, the negative direction of the X-axis) will be defined as forward, and a moving direction of the screw 330 during the plasticizing (for example, the positive direction of the X-axis) will be defined as rearward.

The moving unit 400 advances and retreats the injection unit 300 with respect to the mold unit 800. The moving unit 400 presses the nozzle 320 against the mold unit 800, thereby generating a nozzle touch pressure. The moving unit 400 includes a hydraulic pump 410, a motor 420 serving as a drive source, and a hydraulic cylinder 430 serving as a hydraulic actuator.

The hydraulic pump 410 has a first port 411 and a second port 412. The hydraulic pump 410 is a pump that can rotate in both directions, and switches rotation directions of the motor 420. In this manner, a hydraulic fluid (for example, oil) is sucked from any one of the first port 411 and the second port 412, and is discharged from the other to generate a hydraulic pressure. The hydraulic pump 410 can suck the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control device 700. The motor 420 may be an electric motor, or may be an electric servo motor.

The hydraulic cylinder 430 has a cylinder body 431, a piston 432, and a piston rod 433. The cylinder body 431 is fixed to the injection unit 300. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401. In this manner, the injection unit 300 is pressed forward. The injection unit 300 is advanced, and the nozzle 320 is pressed against the stationary mold 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402. In this manner, the injection unit 300 is pressed rearward. The injection unit 300 is retreated, and the nozzle 320 is separated from the stationary mold 810.

In the present embodiment, the moving unit 400 includes the hydraulic cylinder 430, but the present invention is not limited thereto. For example, instead of the hydraulic cylinder 430, an electric motor and a motion conversion mechanism that converts a rotary motion of the electric motor into a linear motion of the injection unit 300 may be used.

### (Control Device)

For example, the control device 700 is configured to include a computer, and includes a central processing unit (CPU) 701, a storage medium 702 such as a memory, an input interface 703, and an output interface 704 as illustrated in FIGS. 1 and 2. The control device 700 performs various types of control by causing the CPU 701 to execute a program stored in the storage medium 702. In addition, the control device 700 receives a signal from the outside through the input interface 703, and transmits the signal to the outside through the output interface 704.

The control device 700 repeatedly performs the plasticizing process, the mold closing process, the pressurizing process, the mold clamping process, the filling process, the holding pressure process, the cooling process, the depressurizing process, the mold opening process, and the ejection process, thereby repeatedly manufacturing the molding product. A series of operations for obtaining the molding product, for example, an operation from the start of the plasticizing process to the start of the subsequent plasticizing process will be referred to as a "shot" or a "molding cycle". In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, and the ejection process are performed in this order. The order described here is the order of the start times of the respective processes. The filling process, the holding pressure process, and the cooling process are performed during the mold clamping process. The start of the mold clamping process may coincide with the start of the filling process. The completion of the depressurizing process coincides with the start of the mold opening process.

A plurality of processes may be performed at the same time in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. The reason is as follows. Even when the mold opening process starts during the plasticizing process, when the on-off valve closes the flow path of the nozzle 320, the molding material does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, and the ejection process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and can prevent a leakage of the molding material from the nozzle 320 before the filling process starts.

The control device 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control device 700. For example, the screen of the touch panel 770 may display settings of the injection molding machine 10, and information on a current state of the injection molding machine 10. In addition, for example, the screen of the touch panel 770 may display a button for receiving the input operation of the user or an operation unit such as an input field. The touch panel 770 serving as the operation unit 750 detects an input operation of the user on the screen, and outputs a signal corresponding to the input operation to the control device 700. In this manner, for example, while confirming information displayed on the screen, the user can perform settings (including an input of a set value) of the injection molding machine 10 by operating the operation unit provided on the screen. In addition, the user can operate the injection molding machine 10 corresponding to the operation unit by operating the operation unit provided on the screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided. The operation unit 750 and the display unit 760 are disposed on the operation side (negative direction of the Y-axis) of the mold clamping unit 100 (more specifically, the stationary platen 110).

### (First Embodiment)

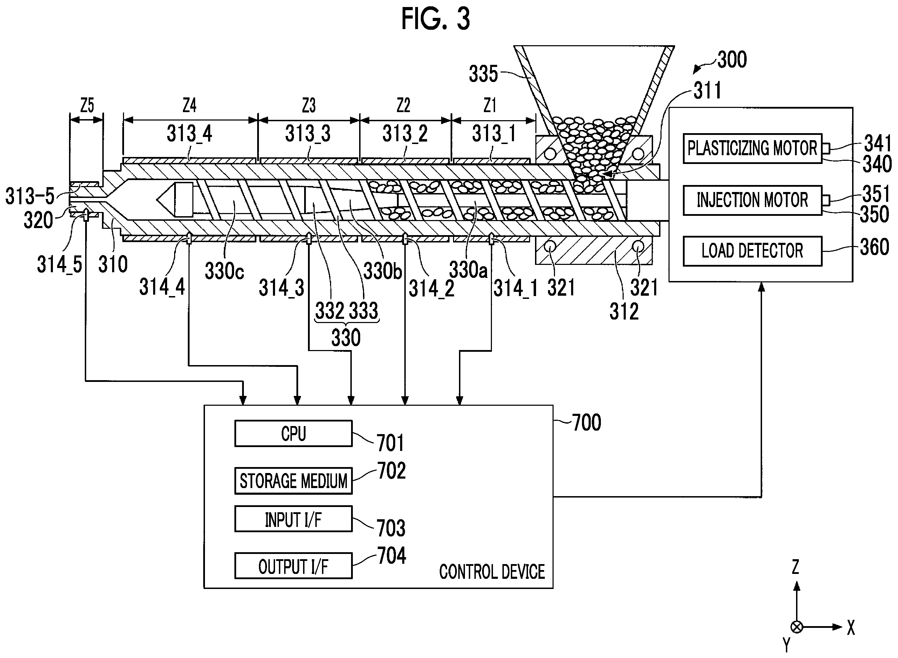

FIG. 3 is a view illustrating a main portion of the injection unit 300 according to a first embodiment. As illustrated in FIG. 3, the injection unit 300 according to the first embodiment includes the cylinder 310 and the screw 330 for feeding the molding material (resin pellet) inside the cylinder 310. In addition, as the heating unit 313, the injection unit 300 according to the present embodiment includes five heating units 313_1 to 313_5 divided into each zone on the outer periphery of the cylinder 310.

The screw 330 integrally includes a screw rotation shaft 332 and a flight 333 spirally provided around the screw rotation shaft 332. When the screw 330 rotates, the flight 333 of the screw 330 moves, and the resin pellet filled inside a screw groove of the screw 330 is fed forward. In an example illustrated in FIG. 3, the resin pellet is used as the molding material.

The screw 330 is distinguished as a supply unit 330a, a compression zone 330b, and a metering zone 330c from a rear side (hopper 335 side) to a front side (nozzle 320 side) along the axial direction, for example. The supply unit 330a is a portion that receives the resin pellet and transports the resin pellet forward. The compression zone 330b is a portion that melts the supplied resin while compressing the supplied resin. The metering zone 330c is a portion that plasticizes a fixed amount of the molten resin at a time. A depth of a screw groove of the screw 330 is deep in the supply unit 330a, is shallow in the metering zone 330c, and is shallower in the compression zone 330b toward the front side. A configuration of the screw 330 is not particularly limited. For example, the depth of the screw groove of the screw 330 may be constant.

The injection molding machine 10 injects the molten resin inside the cylinder 310 from the nozzle 320, and fills the cavity space 801 inside the mold unit 800 with the molten resin. The mold unit 800 is configured to include a stationary mold and a movable mold, and the cavity space 801 is formed between the stationary mold and the movable mold when mold clamping is performed. The resin cooled and solidified in the cavity space 801 is fetched as a molding product after the mold is opened. The resin pellet serving as the molding material is supplied from the hopper 335 to a rear portion of the cylinder 310.

A feed port 311 is formed at a predetermined position of the cylinder 310, and the hopper 335 is connected to a resin feed port. The resin pellet inside the hopper 335 is supplied into the cylinder 310 through the resin feed port.

The cylinder 310 is divided into five zones along a longitudinal direction leading to the nozzle 320. In the present embodiment, the heating units 313 (heaters) are respectively provided in the five zones (zones Z1 to Z5). In addition, the cooler 312 is provided in the vicinity of the resin feed port to which the hopper 335 is connected. In addition, temperature measurers 314_1 to 314_5 are provided in the respective zones.

In the present embodiment, the five zones will be referred to as a first zone Z1, a second zone Z2, a third zone Z3, a fourth zone Z4, and a fifth zone Z5 in order from the vicinity of the resin feed port. The first zone Z1 and the second zone Z2 are provided in the supply unit 330a that receives the resin pellet and transports the resin pellet forward. The third zone Z3 is provided in the compression zone 330b that melts the supplied resin while compressing the supplied resin. The fourth zone Z4 is provided in the metering zone 330c that plasticizes a fixed amount of the molten resin at a time. The fifth zone Z5 is provided in the vicinity of the nozzle 320.

The heating units 313_1 to 313_5 which are individually energized are respectively disposed on an outer periphery of the cylinder 310 in the first zone Z1, the second zone Z2, the third zone Z3, the fourth zone Z4, and the fifth zone Z5. For example, as the heating units 313_1 to 313_5, a band heater that heats the cylinder 310 from the outside is used. The band heater is provided to surround the outer periphery of the cylinder 310. In other words, the heating units 313_1 to 313_5 having a planar shape corresponding to the first zone Z1 to the fifth zone Z5 are attached to the outer periphery of the cylinder 310. Since the heating units 313_1 to 313_5 are energized, the resin pellet can be heated and melted inside the cylinder 310.

The plurality of heating units 313_1 to 313_5 are arrayed along the longitudinal direction of the cylinder 310, and individually heat each of the first zone Z1 to the fifth zone Z5 in which the cylinder 310 is divided in the longitudinal direction. The plurality of heating units 313_1 to 313_5 are feedback-controlled by the control device 700 so that the temperature of each of the zones Z1 to Z5 becomes a set temperature. The temperature of each of the zones Z1 to Z5 is measured by the temperature measurers 314_1 to 314_5. An operation of the injection molding machine 10 is controlled by the control device 700.

Next, the operation of the injection molding machine 10 will be described.

In the plasticizing process, the plasticizing processing unit 602 rotationally drives the plasticizing motor 340 to rotate the screw 330. In this case, a flight (thread) of the screw 330 moves, and the resin pellet (solid molding material) filled inside the screw groove of the screw 330 is fed forward. While the resin pellet moves forward inside the cylinder 310, the resin pellet is gradually melted by being heated with heat from the heating units 313_1 to 313_5 via the cylinder 310. Then, the resin pellet is brought into a completely melted state in a tip portion of the cylinder 310. Then, as the liquid molding material (resin) is fed forward of the screw 330 and is accumulated in a front portion of the cylinder 310, the screw 330 is retreated.

The plasticizing motor encoder 341 detects the rotation of the plasticizing motor 340, and transmits a signal indicating a detection result thereof to the control device 700. A screw rotational speed detector for measuring the rotational speed of the screw 330 is not limited to the plasticizing motor encoder 341, and a general detector can be used.

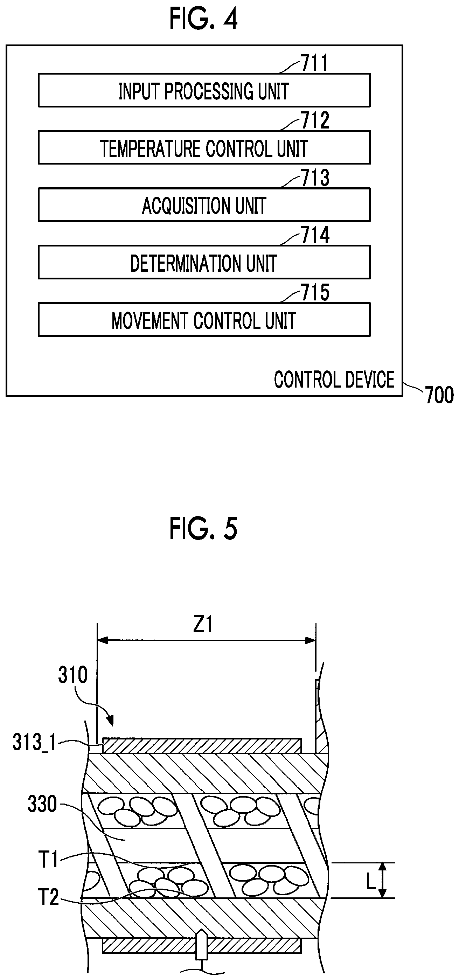

FIG. 4 is a functional block diagram illustrating components of the control device 700 according to the embodiment. Each functional block illustrated in FIG. 4 is conceptual, and may not necessarily be configured to be physical as illustrated. All or a portion of each functional block can be configured to be functionally or physically distributed and integrated in any desired unit. Each processing function performed in each functional block is realized by a program in which all or any desired partial functions are performed by the CPU 701. Alternatively, each functional block may be realized as hardware using a wired logic. As illustrated in FIG. 4, the control device 700 includes an input processing unit 711, a temperature control unit 712, an acquisition unit 713, a determination unit 714, and a movement control unit 715.

The input processing unit 711 inputs a user's operation from the operation unit 750 via the input interface 703. For example, the input processing unit 711 inputs an operation indicating molding stop from a user. In addition, the input processing unit 711 inputs an operation of turning off all of the heating units 313_1 to 313_5 provided in the cylinder 310 after the molding stops. As another example, the input processing unit 711 inputs a user's operation of setting the temperature of the heating units 313_1 to 313_5 provided in the cylinder 310 to a control temperature after the molding stops.

The control temperature is a temperature at which the resin pellet serving as the molding material does not melt, and indicates a temperature at which the molding can be immediately performed. For example, when the resin pellet serving as the molding material is a crystalline resin, a temperature lowered by a predetermined temperature (for example, 20°) from a melting point of the resin is defined as the control temperature. As another example, when the resin pellet serving as the molding material is an amorphous resin, a temperature lowered by a predetermined temperature (for example, 20°) from a glass transition temperature is defined as the control temperature. The predetermined temperature is not limited to 20°, and a temperature suitable for the embodiment of the resin pellet used as the molding material is set.

The temperature control unit 712 controls the heating units 313_1 to 313_5 in accordance with an operation input by the input processing unit 711.

For example, when an operation of turning off the heating units 313_1 to 313_5 is input, the temperature control unit 712 controls the heating units 313_1 to 313_5 to turn off the heating.

As another example, when an operation for setting the control temperature is input, the temperature control unit 712 controls the heating units 313_1 to 313_5 to set the control temperature.

The acquisition unit 713 acquires the temperatures measured by the temperature measurers 314_1 to 314_5.

For example, when the operation for setting the control temperature is input, the acquisition unit 713 acquires the temperatures measured by the temperature measurers 314_1 to 314_5. Then, the temperature control unit 712 controls each of the heating units 313_1 to 313_5 to reach the control temperature, based on the temperatures acquired from the temperature measurers 314_1 to 314_5.

In the present embodiment, after the process of filling the mold unit 800 with the molding material from the cylinder 310 by the injection unit 300 is stopped, when control is performed to stop the heating units 313_1 to 313_5 for heating the cylinder 310, when control is performed to lower the temperature of the heating units 313_1 to 313_5 to the control temperature, or when the heating units 313_1 to 313_5 continuously maintain the temperature at which the molding can be performed (hereinafter, also referred to as a molding temperature), the temperature of the supply unit (for example, the zone Z1) which is a portion of the cylinder 310 for transporting the resin pellet having a solid state to the nozzle side of the cylinder 310 is acquired from the temperature measurer 314_1.

That is, in the present embodiment, the resin pellet melts in a root of the screw 330 such as the zone 1 inside the cylinder 310 (example of the supply unit which is a portion for transporting the resin pellet having a solid state to the nozzle side of the cylinder 310), it is difficult to transport the resin pellet to the nozzle side. When the molten resin in the root cannot be completely removed, it is necessary to disassemble the assembly in the vicinity of the cylinder 310, thereby causing a possibility of time waste. Therefore, in the present embodiment, the temperature of the zone 1 inside the cylinder 310 is acquired from the temperature measurer 314_1. When the determination unit 714 determines that the resin pellet existing in the zone 1 is likely to melt, based on the acquired temperature, the movement control unit 715 controls the movement of the resin pellet existing in the zone 1. In the present embodiment, in order to move the resin pellet existing in the zone 1, the molten resin (molding material) is purged from the nozzle 320 as an example.

The amount of the molten resin to be purged is determined according to the embodiment. However, for example, the resin pellet existing in the zone 1 may be purged by the amount of moving the resin pellet to the zone 2. That is, it is sufficient that the resin pellet does not melt in the vicinity of the root of the cylinder 310. The reason is as follows. For example, when the resin pellet in the zone 2 melts, the resin pellet existing in the zone 1 can push the resin pellet existing in the zone 2 to the nozzle 320 side. Accordingly, the resin can be transported to the nozzle 320 side.

The determination unit 714 determines whether or not the temperature acquired by the acquisition unit 713 from the temperature measurer 314_1 satisfies a predetermined condition defined as a criterion for determining whether or not the resin pellet existing in the zone 1 melts.

The determination unit 714 according to the present embodiment performs the determination using a condition based on an integration value of the calorific value applied to the resin pellet existing in the zone 1. An integration value G[J] of the calorific value applied to the resin pellet from an inner wall of the cylinder 310 provided with the heating unit 313_1 is calculated from Equation (1) below. As illustrated by Equation (1), an integration value of a heat flow rate is calculated among time t2 at which the temperature is acquired, a time at which the purging is completed in a case where the purging is performed, and time t1 at which the mold is stopped in a case where the purging is not performed.
[Equation 1] $G \left[J\right] = {\int }_{t 1}^{t 2} Qdt$ (1)

A heat flow rate Q[J/s] per unit length which is applied to the resin pellet from the inner wall of the cylinder 310 provided with the heating unit 313_1 is calculated from Equation (2) below, based on the Fourier's law. Equation (2) is defined as a thermal conductivity k of a solid resin and a void, a cylinder inner wall area A per unit length, a screw surface temperature T1, a cylinder inner wall temperature T2, and a distance L between a cylinder inner wall and a screw surface.
[Equation 2]$Q = - k \times A \times \frac{dT}{dx} = - k \times A \times \frac{T 1 - T 2}{L}$ (2)

FIG. 5 is a view illustrating a position of the screw surface from which the temperature T1 is to be measured and a position of the cylinder inner wall from which the temperature T2 is to be measured. The temperature T2 of the cylinder inner wall illustrated in FIG. 5 can be estimated, based on the temperature measured by the temperature measurer 314_1. In addition, the temperature T1 of the screw surface can be estimated, based on a combination of a mathematical model indicating a temperature change inside the cylinder 310 and the temperature measured by the temperature measurer 314_1.

In this manner, the determination unit 714 according to the present embodiment can calculate the integration value G[J] of the calorific value applied to the resin pellet existing in the zone 1, based on the temperature measured by the temperature measurer 314_1.

The determination unit 714 determines whether or not the integration value G[J] of the calorific value applied to the resin pellet existing in the zone 1 is equal to or greater than a threshold. The determination can be expressed as Equation (3) . Equation (3) is defined as a correction value X, a mass m of the resin pellet, a specific heat c of the resin pellet, and a melting point of the resin when the resin pellet is a crystalline resin, or a glass transition temperature Tg when the resin pellet is an amorphous resin. The correction value X is a value determined according to the embodiment. For example, it is conceivable that the correction value X is set to be the integration value of the calorific value required for half of the resin pellet in the zone 1 to melt. Furthermore, Equation (3) is defined as the temperature of the resin in the zone 1 (example of the root of the cylinder 310) when the purging is stopped in a case where the purging is performed, and a temperature T0[K] of the resin in the zone 1 when the molding is stopped in a case where the purging is not performed. For example, the temperature T0 of the resin in the zone 1 is an average value of the temperatures of the resin existing inside the zone 1. From the mathematical model indicating the temperature change inside the cylinder 310 described above, the determination unit 714 can estimate a temperature distribution of the resin inside the zone 1. Then, the determination unit 714 can calculate the average value of the temperatures of the resin in the zone 1 from the temperature distribution.
[Equation 3]$G \left[J\right] ≧ 0.9 X ⋅ m ⋅ c \left(Tg-T0\right)$ (3)

In an example expressed by Equation (3), an example will be described in which 90% of the calorific value reaching the melting point of the resin in a case of the crystalline resin or the glass transition temperature in a case of the amorphous resin is set as a threshold. However, the present invention is not limited to the example in which 90% of the calorific value is set as the threshold. The threshold is the calorific value before reaching the melting point of the resin or the glass transition temperature in the case of the amorphous resin, and may be a great value to reduce the number of purging operations.

The movement control unit 715 performs movement control of the resin pellet existing in the zone 1, when the temperature acquired from the temperature measurer 314_1 by the acquisition unit 713 satisfies a predetermined condition. In the present embodiment, when the determination unit 714 determines that Equation (3) is satisfied as the predetermined condition, the movement control unit 715 performs the movement control of the resin pellet existing in the zone 1. In the present embodiment, without being limited to a case where the predetermined condition satisfies Equation (3), any desired condition may be set as long as it can be inferred that the resin pellet existing in the zone 1 melts, based on the temperature acquired from the temperature measurer 314_1. Any desired condition may be set regardless of well-known methods.

In this way, the movement control unit 715 moves the resin pellet existing in the zone 1 to the nozzle 320 side, when the calorific value calculated based on the temperature acquired by the acquisition unit 713 and applied to the resin pellet existing in the zone 1 from the cylinder 310 after the filling process is stopped is equal to or greater than a threshold determined based on the calorific value by which the resin pellet melts (when a predetermined condition is satisfied). The movement control unit 715 according to the present embodiment performs purging control for injecting the molten resin from the nozzle 320 in order to move the resin pellet existing in the zone 1 to the nozzle 320 side. In the present embodiment, an example of performing the purging control will be described. However, the present invention is not limited to the purging control. That is, the injection molding machine 10 may move the resin pellet existing in the zone 1 from the zone 1. For example, the injection molding machine 10 may be provided with a mechanism for removing the resin pellet existing in the zone 1 from the feed port 311.

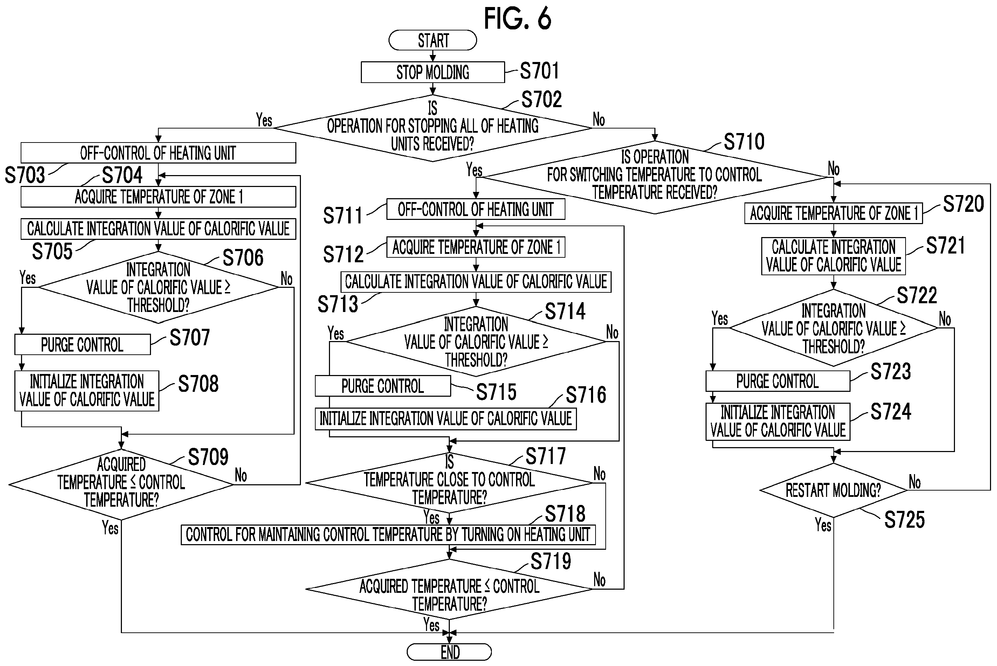

Next, a control method performed after the molding is stopped in the injection molding machine 10 according to the first embodiment will be described. FIG. 6 is a flowchart illustrating control performed after the molding is stopped in the injection molding machine to the first embodiment.

First, the control device 700 of the injection molding machine 10 stops the molding (S701). In the present embodiment, after the molding is stopped, the injection unit 300 is moved so that the nozzle 320 provided in a front end portion of the cylinder 310 of the injection unit 300 is separated from the mold unit 800. In the present embodiment, an example will be described in which the molding is stopped at a timing when plasticizing is completed by filling the cylinder 310 with the molding material. However, at any desired timing, the molding may be stopped. For example, the molding may be stopped while the plasticizing is performed.

Thereafter, the input processing unit 711 determines whether or not an operation for stopping all of the heating units 313 is received (S702). As a case of stopping all of the heating units 313, for example, it is conceivable to adopt a case where the molding is stopped for a long time.

When it is determined that the operation for stopping all of the heating units 313 is received (S702: Yes), the temperature control unit 712 controls the heating units 313 (heating units 313_1 to 313_5 in all zones) to be turned off (S703).

Next, the acquisition unit 713 acquires the temperature from the temperature measurer 314_1 in the zone 1 (S704: an example of an acquisition process). Based on the acquired temperature, the determination unit 714 calculates an integration value of the calorific value applied to the resin pellet, from a purging completion time or a molding stop time when the purging is not performed (S705).

Then, the determination unit 714 determines whether or not the integration value of the calorific value is equal to or greater than a threshold (threshold (0.9 ·X ·m ·c (Tg-T1) described above) (S706). When it is determined that the integration value of the calorific value is smaller than the threshold (S706: No), the process proceeds to S709.

On the other hand, when the determination unit 714 determines that the integration value of the calorific value is equal to or greater than the threshold (S706: Yes), the movement control unit 715 performs the purging control to inject the molten resin from the nozzle 320, and moves the resin pellet in the zone 1 from the zone 1 (S707: an example of a movement control process). The determination unit 714 initializes the integration value of the calorific value (S708).

Then, the determination unit 714 determines whether or not the temperature acquired by the acquisition unit 713 is equal to or lower than the control temperature (S709). When it is determined that the temperature is higher than the control temperature (S709: No), the process in S704 restarts by acquiring the temperature from the temperature measurer 314_1 in the zone 1.

On the other hand, when the determination unit 714 determines that the temperature acquired by the acquisition unit 713 is equal to or lower than the control temperature (S709: Yes), the process ends.

On the other hand, when it is determined that the operation for stopping all of the heating units 313 is not received (S702: No), the input processing unit 711 further determines whether or not an operation for switching the temperature of the heating unit 313 to the control temperature is received (S710). As a case of switching the temperature of the heating unit 313 to the control temperature, for example, it is conceivable to adopt a case where the amount of the molding material to be purged needs to be reduced although the temperature needs to be quickly raised when the molding restarts after the molding is stopped.

When it is determined that the operation for switching the temperature of the heating unit 313 to the control temperature is received (S710: Yes), the heating unit 313 (heating units 313_1 to 313_5 in all zones) is controlled to be turned off as in S704 to S708. Thereafter, the integration value of the calorific value applied to the resin pellet is calculated. The purging control is performed, and the integration value is initialized in accordance with the integration value (S712 to S716).

Thereafter, the determination unit 714 determines whether or not the temperature acquired by the acquisition unit 713 is close to the control temperature (S717). When it is determined that the temperature is close to the control temperature (S717: Yes), the temperature control unit 712 turns on the heating unit 313 (heating units 313_1 to 313_5 in all zones), and controls the heating unit 313 to maintain the control temperature (S718) . When it is determined that the temperature is not close to the control temperature (S717: No), the process proceeds to S719.

Then, the determination unit 714 determines whether or not the temperature acquired by the acquisition unit 713 is equal to or lower than the control temperature (S719). When it is determined that the temperature is higher than the control temperature (S719: No), the process in S712 restarts by acquiring the temperature from the temperature measurer 314_1 in the zone 1.

On the other hand, when the determination unit 714 determines that the temperature acquired by the acquisition unit 713 is equal to or lower than the control temperature (S719: Yes), the process ends.

When it is determined in S710 that the operation for switching the temperature of the heating unit 313 to the control temperature is not received (S710: No), the acquisition unit 713 acquires the temperature from the temperature measurer 314_1 in the zone 1 (S720: an example of the acquisition process). In this way, as a case of maintaining the molding temperature, for example, it is conceivable to adopt a case where the molding temperature needs to be maintained even though a purging amount increases. In this way, even when the molding temperature needs to be maintained, it is desired to suppress a possibility that the resin pellet in the zone 1 may melt. Therefore, in the present embodiment, the following processes are performed.

Based on the acquired temperature, the determination unit 714 calculates the integration value of the calorific value applied to the resin pellet, from the purging completion time or the molding stop time when the purging is not performed (S721) .

Then, the determination unit 714 determines whether or not the integration value of the calorific value is equal to or greater than the threshold (threshold (0.9·X·m·c(Tg-T1) described above) (S722). When it is determined that the integration value of the calorific value is smaller than the threshold (S722: No), the process proceeds to S725.

On the other hand, when the determination unit 714 determines that the integration value of the calorific value is equal to or greater than the threshold (S722: Yes), the movement control unit 715 performs the purging control to inject the molten resin from the nozzle 320, and moves the resin pellet in the zone 1 from the zone 1 (S723: an example of the movement control process). The determination unit 714 initializes the integration value of the calorific value (S724).

Then, the determination unit 714 determines whether or not the molding is started (S725). When it is determined that the molding is not started (S725: No), the process in S720 restarts by acquiring the temperature from the temperature measurer 314_1 in the zone 1.

On the other hand, when the determination unit 714 determines that the molding is started (S725: Yes), the process ends.

As in the above-described process procedure, in the present embodiment, not only the temperature of the heating unit 313 is monitored, but also it is determined whether or not the molding material melts, based on the calorific value integrated in the molding material (resin pellet) extracted at the temperature. In this manner, it is possible to improve accuracy in determining whether or not the molding material melts. The movement control of the molding material is performed in accordance with the determination result. Accordingly, it is possible to suppress a possibility that the molding material may melt in the vicinity of the root of the cylinder 310.

For example, an interval at which the acquisition unit 713 of the present embodiment acquires the temperature from the temperature measurer 314_1 is set, based on a controllable interval of the heating unit 313.

In the present embodiment, when the molding restarts after the molding is stopped, the cylinder 310 is filled with the resin (molding material). Therefore, a restart time can be shortened. Similarly, when the temperature of the heating unit 313 is lowered to the control temperature, and when the temperature is raised again to the temperature at which the molding can be performed, the molding is performed in a state where the cylinder 310 is filled with the resin (molding material). Therefore, the restart time can be shortened.

In the related art, when the heating unit 313 maintains the temperature at which the molding can be performed (molding temperature) even though the molding is not performed, if the heating unit 313 is left for a long time, the resin pellet (molding material) melts due to an excessively applied calorific value in the root of the screw 330, thereby causing a problem in that the resin pellet cannot be satisfactorily transported. In this case, it is conceivable to suppress a possibility that the resin pellet may melt, by lowering the temperature of the heating unit 313 to the control temperature. However, there is a possibility that the resin pellet may melt due to the calorific value applied until the temperature is lowered to the control temperature.

In contrast, in the present embodiment, as described above, only when the integration value of the calorific value exceeds the threshold, the purging control is performed. In this manner, it is possible to suppress a possibility that the molding material may melt in the vicinity of the root of the cylinder 310. In addition, according to the above-described purging control, it is not necessary to discharge all of the molding materials inside the cylinder 310, unlike a technique in the related art. Therefore, consumption of the molding material can be reduced.

In this way, the injection molding machine 10 according to the above-described embodiment moves the resin pellet (molding material) in accordance with the calorific value applied to the molding material. In this manner, suppressing a loss of the molding material and shortening a time required until the molding starts are realized.

Furthermore, burden relating to the control can be reduced by automating the process performed when the molding is stopped. This can reduce labor costs.

Hitherto, the embodiments of the injection molding machine have been described. The invention is set out in the appended set of claims.

### Brief Description of the Reference Symbols

10: injection molding machine
300: injection unit
330: screw
700: control device
711: input processing unit
712: temperature control unit
713: acquisition unit
714: determination unit
715: movement control unit

## Claims

1. An injection molding machine (10) comprising:
a control device (700) configured to control an injection unit (300) configured to fill a mold unit (800) with a molding material plasticized inside a cylinder (310),
wherein the control device (700) includes an acquisition unit (713) configured to acquire a temperature of a portion of the cylinder (310), which transports the molding material to a nozzle (320) side of the cylinder (310), after molding with the molding material from the cylinder (310) by the injection unit (300) is stopped, the cylinder (310) being divided into a plurality of zones in an axial direction of the cylinder (310), and the portion being any one of two zones (Z1, Z2) closest among the plurality of zones to a feed port (311),
**characterized in that**
the control device (700) further includes a movement control unit (715) configured to control movement of the molding material such that a predetermined amount of the molding material existing in the portion moves to the nozzle (320) side after the molding is stopped, when the acquired temperature satisfies a predetermined condition.

2. The injection molding machine (10) according to claim 1,
wherein the movement control unit (715) is configured to inject the molding material from the nozzle (320) to move the molding material existing in the portion to the nozzle (320) side.

3. The injection molding machine (10) according to claim 1 or 2,
wherein the movement control unit (715) is configured to control movement of the molding material such that the molding material existing in the portion moves to the nozzle (320) side, when a calorific value calculated based on the acquired temperature and applied to the molding material existing in the portion from the cylinder (310) after the molding is stopped is equal to or greater than a threshold determined based on a calorific value by which the molding material melts.

4. The injection molding machine (10) according to any one of claims 1 to 3,
wherein the acquisition unit (713) is configured to acquire the temperature of the portion of the cylinder (310), when any one control is performed out of control for stopping a heating unit (313) that heats the cylinder (310) after the molding is stopped, control for lowering a temperature of the heating unit (313) to a predetermined temperature, and control for causing the heating unit (313) to continuously maintain a temperature which enables the injection unit (300) to perform molding using the molding material.

5. A control method for an injection molding machine (10) comprising:
an acquisition process of acquiring a temperature of a portion of a cylinder (310) which transports a molding material to a nozzle (320) side of the cylinder (310) after molding with the molding material from the cylinder (310) by an injection unit (300) is stopped, the cylinder (310) being divided into a plurality of zones in an axial direction of the cylinder (310), and the portion being any one of two zones (Z1, Z2) closest among the plurality of zones to a feed port (311),
**characterized in that**
the control method further comprises a movement control process of controlling movement of the molding material such that a predetermined amount of the molding material existing in the portion moves to the nozzle (320) side after the molding is stopped, when the acquired temperature satisfies a predetermined condition.

## Patentansprüche

1. Spritzgießmaschine (10), umfassend:
eine Steuervorrichtung (700), die so konfiguriert ist, dass sie eine Einspritzeinheit (300) steuert, die so konfiguriert ist, dass sie eine Formeinheit (800) mit einem Formmaterial, das im Inneren eines Zylinders (310) plastifiziert ist, füllt,
wobei die Steuervorrichtung (700) eine Erfassungseinheit (713) umfasst, die so konfiguriert ist, dass sie eine Temperatur eines Abschnitts des Zylinders (310) erfasst, der das Formmaterial zu einer Düsen (320)-Seite des Zylinders (310) transportiert, nachdem Formen mit dem Formmaterial aus dem Zylinder (310) durch die Einspritzeinheit (300) gestoppt wird, wobei der Zylinder (310) in mehrere Zonen in einer Axialrichtung des Zylinders (310) unterteilt ist und der Abschnitt einer von zwei Zonen (Z1, Z2), die unter den mehreren Zonen am nächsten zu einer Zuführöffnung (311) ist, ist,
**dadurch gekennzeichnet, dass**
die Steuervorrichtung (700) ferner eine Bewegungssteuereinheit (715) umfasst, die so konfiguriert ist, dass sie Bewegung des Formmaterials so steuert, dass sich eine vorbestimmte Menge des Formmaterials, das in dem Abschnitt vorhanden ist, zu der Düsen (320)-Seite hin bewegt, nachdem das Formen gestoppt wird, wenn die erfasste Temperatur eine vorbestimmte Bedingung erfüllt.

2. Spritzgießmaschine (10) nach Anspruch 1,
wobei die Bewegungssteuereinheit (715) so konfiguriert ist, dass sie das Formmaterial aus der Düse (320) einspritzt, um das Formmaterial, das in dem Abschnitt vorhanden ist, zu der Düsen (320)-Seite zu bewegen.

3. Spritzgießmaschine (10) nach Anspruch 1 oder 2,
wobei die Bewegungssteuereinheit (715) so konfiguriert ist, dass sie Bewegung des Formmaterials so steuert, dass sich das Formmaterial, das in dem Abschnitt vorhanden ist, zu der Düsen (320)-Seite bewegt, wenn ein Heizwert, der auf Grundlage der erfassten Temperatur berechnet und auf das Formmaterial angewendet wird, das in dem Abschnitt vorhanden ist, aus dem Zylinder (310), nachdem das Formen gestoppt wird, gleich oder größer als ein Schwellenwert ist, der auf Grundlage eines Heizwerts bestimmt wird, bei dem das Formmaterial schmilzt.

4. Spritzgießmaschine (10) nach einem der Ansprüche 1 bis 3,
wobei die Erfassungseinheit (713) so konfiguriert ist, dass sie die Temperatur des Abschnitts des Zylinders (310) erfasst, wenn irgendeine Steuerung von Steuerung zum Stoppen einer Heizeinheit (313), die den Zylinder (310), nachdem das Formen gestoppt wird, heizt, Steuerung zum Senken einer Temperatur der Heizeinheit (313) auf eine vorbestimmte Temperatur, und Steuerung zum Veranlassen der Heizeinheit (313), kontinuierlich eine Temperatur beizubehalten, die es der Einspritzeinheit (300) ermöglicht, Formung unter Verwendung des Formmaterials durchzuführen, durchgeführt wird.

5. Steuerverfahren für eine Spritzgießmaschine (10), umfassend:
einen Erfassungsprozess von Erfassen einer Temperatur eines Abschnitts eines Zylinders (310), der ein Formmaterial zu einer Düsen (320)-Seite des Zylinders (310) transportiert, nachdem Formen mit dem Formmaterial aus dem Zylinder (310) durch eine Einspritzeinheit (300) gestoppt wird, wobei der Zylinder (310) in mehrere von Zonen in einer Axialrichtung des Zylinders (310) unterteilt ist und der Abschnitt eine von zwei Zonen (Z1, Z2), die unter den mehreren Zonen am nächsten zu einer Zuführöffnung (311) ist, ist,
**dadurch gekennzeichnet, dass**
das Steuerverfahren ferner einen Bewegungssteuerprozess von Steuern von Bewegung des Formmaterials umfasst, sodass sich eine vorbestimmte Menge des Formmaterials, das in dem Abschnitt vorhanden ist, zu der Düsen (320)-Seite hin bewegt, nachdem das Formen gestoppt wird, wenn die erfasste Temperatur eine vorbestimmte Bedingung erfüllt.

## Revendications

1. Une machine de moulage par injection (10) comprenant :
un dispositif de commande (700) configuré pour commander une unité d'injection (300) configurée pour remplir une unité de moule (800) avec un matériau de moulage plastifié à l'intérieur d'un cylindre (310),
dans laquelle le dispositif de commande (700) comprend une unité d'acquisition (713) configurée pour acquérir une température d'une partie du cylindre (310), qui transporte le matériau de moulage du côté de la buse (320) du cylindre (310), après l'arrêt du moulage avec le matériau de moulage depuis le cylindre (310) par l'unité d'injection (300), le cylindre (310) étant divisé en une pluralité de zones dans une direction axiale du cylindre (310), et la partie étant l'une quelconque des deux zones (Z1, Z2) les plus proches parmi la pluralité de zones d'un orifice d'alimentation (311),
**caractérisée en ce que** :
le dispositif de commande (700) comprend en outre une unité de commande de déplacement (715) configurée pour commander le déplacement du matériau de moulage de sorte qu'une quantité prédéterminée du matériau de moulage existant dans la partie se déplace du côté de la buse (320) après l'arrêt du moulage, lorsque la température acquise satisfait une condition prédéterminée.

2. La machine de moulage par injection (10) selon la revendication 1,
dans laquelle l'unité de commande de déplacement (715) est configurée pour injecter le matériau de moulage depuis la buse (320) afin de déplacer le matériau de moulage existant dans la partie du côté de la buse (320).

3. La machine de moulage par injection (10) selon la revendication 1 ou 2,
dans laquelle l'unité de commande de déplacement (715) est configurée pour commander le déplacement du matériau de moulage de sorte que le matériau de moulage existant dans la partie se déplace du côté de la buse (320), lorsqu'une valeur calorifique calculée sur la base de la température acquise et appliquée au matériau de moulage existant dans la partie depuis le cylindre (310) après l'arrêt du moulage est supérieure ou égale à un seuil déterminé sur la base d'une valeur calorifique selon laquelle le matériau de moulage fond.

4. La machine de moulage par injection (10) selon l'une quelconque des revendications 1 à 3,
dans laquelle l'unité d'acquisition (713) est configurée pour acquérir la température de la partie du cylindre (310), lorsqu'une commande quelconque est effectuée parmi la commande d'arrêt d'une unité de chauffage (313) qui chauffe le cylindre (310) après l'arrêt du moulage, la commande d'abaissement de la température de l'unité de chauffage (313) à une température prédéterminée, et la commande pour amener l'unité de chauffage (313) à maintenir en continu une température qui permet à l'unité d'injection (300) d'effectuer le moulage à l'aide du matériau de moulage.

5. Une méthode de commande pour une machine de moulage par injection (10) comprenant :
un procédé d'acquisition pour acquérir une température d'une partie d'un cylindre (310) qui transporte un matériau de moulage du côté de la buse (320) du cylindre (310) après l'arrêt du moulage avec le matériau de moulage depuis le cylindre (310) par une unité d'injection (300), le cylindre (310) étant divisé en une pluralité de zones dans une direction axiale du cylindre (310), et la partie étant l'une quelconque des deux zones (Z1, Z2) les plus proches parmi la pluralité de zones d'un orifice d'alimentation (311),
**caractérisé en ce que** :
la méthode de commande comprend en outre un procédé de commande de déplacement pour commander le déplacement du matériau de moulage de sorte qu'une quantité prédéterminée du matériau de moulage existant dans la partie se déplace du côté de la buse (320) après l'arrêt du moulage, lorsque la température acquise satisfait une condition prédéterminée.
